# FASCICULE DE BREVET EUROPEEN

(11) **EP 4 076 704 B1**
(45) Date de publication et mention de la délivrance du brevet: **07.02.2024**
(21) Numéro de dépôt: 20820420.6
(22) Date de dépôt: 10.12.2020
(51) Int. Cl.: B01D 53/62, B01D 53/75, C10G 11/18, F25J 3/02, F25J 3/06, C10K 1/04, C10K 1/32

(54) **PROCÉDÉ ET APPAREIL DE SÉPARATION DE DIOXYDE DE CARBONE D'UN GAZ RÉSIDUAIRE D'UNE INSTALLATION DE CRAQUAGE CATALYTIQUE SUR LIT FLUIDISÉ (FCC)**
VERFAHREN UND VORRICHTUNG ZUR ABTRENNUNG VON KOHLENDIOXID AUS EINEM RESTGAS IN EINER KATALYTISCHEN WIRBELSCHICHTKRACKANLAGE (FCC)
METHOD AND APPARATUS FOR SEPARATING CARBON DIOXIDE FROM A RESIDUAL GAS IN A FLUIDISED BED CATALYTIC CRACKING PLANT (FCC)

(30) Priorité: 19.12.2019 FR 1914848
(43) Date de publication de la demande: 26.10.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: RODRIGUES, Guillaume, 94503 CHAMPIGNY SUR MARNE (FR); DUBETTIER-GRENIER, Richard, 94503 CHAMPIGNY SUR MARNE (FR)
(74) Mandataire: Air Liquide
(86) Numéro de dépôt international: PCT/EP2020/085450
(87) Numéro de publication internationale: WO 2021/122273

(56) Documents cités:
- US-A- 4 542 114
- US-A- 5 560 817
- US-A- 5 565 089

## Description

La présente invention est relative à un procédé et à un appareil de séparation de dioxyde de carbone d'un gaz résiduaire d'une installation de craquage catalytique sur lit fluidisé.

Une des sources principales d'émission de CO2 dans le raffinage du pétrole est le craquage catalytique sur lit fluidisé, souvent désigné par le sigle FCC (fluidised catalytic cracking). Le craquage produit entre 20 et 50% des émissions de la raffinerie et le gaz résiduaire qu'il produit contient entre 10 et 20% de dioxyde de carbone et souvent du monoxyde de carbone.

Le craquage catalytique en lit fluidisé est un procédé de raffinage qui a pour but de transformer, en présence d'un catalyseur, les coupes lourdes à longues chaînes d'hydrocarbonés en coupes légères pour être utilisées dans la fabrication du carburant.

En présence du catalyseur, à haute température (450 à 550 °C) et à pression proche de la pression atmosphérique (<5 bar abs typiquement), on casse les grosses molécules hydrocarbonées pour avoir de petites molécules ayant un indice d'octane élevé.

Les pourcentages indiquant des puretés dans ce document sont des pourcentages molaires, sauf indication contraire.

Le procédé industriel, connu depuis 1928, est basé sur l'utilisation d'un lit fluidisé de catalyseur qui circule entre un réacteur et un régénérateur. La charge (provenant typiquement des unités de distillation et distillation sous vide de la raffinerie) est injectée avec le catalyseur entrant dans le réacteur dans une canalisation (aussi appelé « riser ») où se déroule la réaction de craquage. Les produits de la réaction de craquage catalytique sortant de la canalisation sont séparés du catalyseur au moyen de séparateurs mécaniques (typiquement des cyclones) puis sont envoyés dans la tour de fractionnement. Lors de la réaction de craquage, du coke se forme à la surface du catalyseur qui s'écoule de manière continue entre le réacteur et le régénérateur où ce coke va être au moins partiellement oxydé principalement en CO et CO2 par injection d'air (éventuellement enrichi en oxygène).

Le catalyseur peut ainsi être totalement ou partiellement (c'est-à-dire que le coke n'est pas complètement éliminé) régénéré, puis retourne au réacteur.

Un gaz résiduaire, appelé en anglais « flue gas », contenant du dioxyde de carbone et de l'azote et éventuellement du monoxyde de carbone, par exemple entre 10 et 20¨de CO2 et entre 0 et 10% de monoxyde de carbone typiquement 12.5% CO2, 7.5% CO, 80% N2, tous les pourcentages de ce document étant des pourcentages molaires (sur base sèche), est produit dans le régénérateur.

Il est à nouveau séparé du catalyseur et des poussières par des séparateurs mécaniques gaz/solide (en général des cyclones) dans le régénérateur puis éventuellement dans un précipitateur électrostatique. Les conditions de ce gaz résiduaire à la sortie du régénérateur sont typiquement une température entre 500 et 850°C et une pression entre pression atmosphérique et 5 barg Les exemples de ce document considéreront comme hypothèses une température de 715°C et une pression de 2,4 barg, Le gaz résiduaire est ensuite détendu (dans une turbine ou bien dans une vanne) jusqu'à la pression atmosphérique puis, s'il contient du CO, est traité pour convertir le monoxyde de carbone en dioxyde de carbone par combustion à l'air dans un convertisseur appelé « CO boiler ». Ce convertisseur produit de la chaleur qui est utilisée pour produire de la vapeur d'eau ou pour réchauffer un autre fluide (par exemple de l'huile chaude).

En cas de capture de CO2, l'état de l'art est ensuite de traiter ce gaz résiduaire enrichi en dioxyde de carbone par lavage aux amines pour enlever le dioxyde de carbone qu'il contient. Ce lavage consomme beaucoup de vapeur d'eau qui n'est pas nécessairement disponible en excès sur site et dont la production consomme des combustibles fossiles.

Il est connu de US4542114 de modifier un FCC pour alimenter le régénérateur par un gaz oxydant constitué par un mélange de dioxyde de carbone (éventuellement recyclé) et entre 24 et 30% d'oxygène au lieu de l'air. Le gaz réagit avec le coke pour libérer de la chaleur et régénérer le catalyseur. Le gaz résiduaire formé dans le régénérateur contient 83% de dioxyde de carbone, 9% d'eau, 7% de monoxyde de carbone, 0,5% d'oxygène, 0,5% d'oxydes de soufre et 500ppm de NOx. Le monoxyde de carbone est oxydé en dioxyde de carbone en présence d'oxygène. Les gaz de combustion chauds sont refroidis en générant de la vapeur d'eau. Ils peuvent être ensuite purifiés (pour éliminer les impuretés tel que SOx, NOx, puis l'excès d'oxygène et autres gaz de l'air (N2, Ar)) et éventuellement comprimés et séchés (voire liquéfiés suivant leur usage final) "CO2 Capture Project Phase 3-Oxyfuel Large Scale Pilot and Démonstration Projects », 2nd Oxyfuel Combustion Conference 2011 décrit le fonctionnement d'un FCC en mode oxycombustion. Une partie du gaz résiduaire produit est recyclée à la combustion. Dans ce cas, le gaz résiduaire produit par le régénérateur comprend généralement entre 80 et 98 % vol de dioxyde de carbone (base sèche).

Les procédés FCC utilisant une oxycombustion dans le régénérateur impliquent des modifications significatives sur le coeur du procédé, sur la façon de régler en marche stable les équilibres subtils de cette unité (débit de catalyseur circulant, transfert thermique, coke résiduel sur le catalyseur), et sur la façon de démarrer/stabiliser le fonctionnement de l'unité. C'est la raison pour laquelle, les opérateurs de FCC sont aujourd'hui réticents vis-à-vis de cette technologie qui n'est pas encore référencée à l'échelle industrielle.

Afin de surmonter ces difficultés, la présente invention propose de ne pas modifier de manière significative le coeur du procédé FCC (=le réacteur et le régénérateur), mais de traiter de manière innovante le gaz résiduaire du régénérateur en produisant un gaz résiduaire de FCC 'concentré' après avoir converti le monoxyde de carbone présent dans le gaz résiduaire en CO2 par combustion en présence d'un gaz riche en oxygène et d'un gaz contenant du dioxyde de carbone qui peut être un recycle des fumées de ce convertisseur (avant ou après traitement de ces fumées) ou bien un gaz produit en séparant le gaz issu du convertisseur.

Cette séparation peut s'effectuer en enrichissant le gaz résiduaire issu du convertisseur en CO2 dans une unité d'adsorption.

L'avantage est d'augmenter la concentration en CO2 du gaz produit par le convertisseur. Alors que cette concentration est typiquement de 15-20% pour une opération du convertisseur CO en mode 'combustion à l'air, selon l'invention, p, atteint une concentration de 20 à 35% CO2 suivant le type de recycle effectué. Il est possible de recycler une partie de la fumée du convertisseur CO directement ou sinon de recycler un gaz produit en séparant la fumée, tel qu'un gaz de queue d'unité d'adsorption ou un gaz riche CO2 produit par séparation cryogénique)

Cette augmentation de concentration en CO2 rend la séparation du CO2 du reste des autres constituants plus aisée, et peut permettre d'améliorer significativement le coût et l'efficacité de l'unité de capture de CO2 qui est placée en aval.

Selon un objet de l'invention, il est prévu un procédé de séparation de dioxyde de carbone d'un gaz résiduaire d'une installation de craquage catalytique sur lit fluidisé contenant du dioxyde de carbone, de l'azote et du monoxyde de carbone, dans lequel :
i) On convertit au moins une partie du monoxyde de carbone du gaz résiduaire en dioxyde de carbone pour former un débit enrichi en dioxyde de carbone par combustion,
ii) On sépare au moins une partie du débit enrichi en dioxyde de carbone de l'étape i), par adsorption pour former un gaz enrichi en dioxyde de carbone et appauvri en azote (29) et un gaz riche en azote et appauvri en dioxyde de carbone (31) et on sépare dans un appareil de séparation (30) au moins une partie du gaz enrichi en dioxyde de carbone et appauvri en azote par séparation à une température inférieure à 0°C par condensation partielle et/ou par distillation pour former un fluide riche en dioxyde de carbone et un fluide appauvri en dioxyde de carbone et
iii) On envoie un gaz contenant au moins 90% d'oxygène à la combustion de l'étape i) ainsi qu'un gaz contenant au moins 40% de dioxyde de carbone, constitué soit par un produit de la séparation du débit enrichi en dioxyde de carbone, soit par une partie du débit enrichi en dioxyde de carbone.

Selon d'autres objets facultatifs :
- on sépare le débit enrichi en dioxyde de carbone par distillation et/ou par condensation partielle et/ou par adsorption et/ou par absorption pour produire le produit contenant au moins 40% de dioxyde de carbone.
- on comprime le débit enrichi en dioxyde de carbone en amont de l'étape ii) jusqu'à une pression entre 2.5 et 10 bars abs.
- le gaz riche en azote et appauvri en dioxyde de carbone contient moins que 5% mol de CO2, voire moins de 3% de CO2 ou même moins que 1,5% de CO2.
- le fluide riche en dioxyde de carbone contient plus que 45% mol de CO2, voire plus que 50% de CO2 ou même plus que 70% de CO2, ou encore plus de 80% CO2.
- le fluide appauvri en dioxyde de carbone contient au plus 25% de CO2.
- le fluide appauvri en dioxyde de carbone est comprimé et mélangé avec le débit enrichi en dioxyde de carbone envoyé à l'étape ii).
- on détend le gaz riche en azote et appauvri en dioxyde de carbone dans une turbine et on l'envoie à l'atmosphère, éventuellement après réchauffage.
- le gaz riche en azote et appauvri en dioxyde de carbone est réchauffé par un fluide provenant de l'installation de craquage catalytique ou par au moins une partie du gaz enrichi en dioxyde de carbone et appauvri en azote ou par au moins une partie du gaz résiduaire, ou au moins une partie du débit enrichi en dioxyde de carbone.
- on détend le gaz résiduaire en amont de l'étape i) dans une turbine et
- on comprime le débit enrichi en dioxyde de carbone dans un compresseur entraîné par la turbine en amont de l'étape ii).
- un générateur d'électricité et/ou un moteur est monté sur le même arbre ou le même multiplicateur que le compresseur du débit enrichi en dioxyde de carbone en amont de l'étape ii) et la turbine du gaz résiduaire.
- on sépare le fluide appauvri en dioxyde de carbone dans une membrane pour produire un perméat enrichi en CO2 et on envoie le perméat en amont de l'étape ii).
- le non-perméat est détendu dans une turbine et/ou mélangé avec le gaz riche en azote et appauvri en dioxyde de carbone et/ou utilisé comme gaz de régénération pour l'étape ii).
- la membrane sépare le fluide à une température inférieure à -30°C.
- le fluide appauvri en dioxyde de carbone et/ou le gaz riche en azote et appauvri en dioxyde de carbone est détendu dans une turbine jusqu'à une température inférieure à 0°C et supérieure à -100°C dans une enceinte contenant l'appareil de séparation.
- on envoie à la combustion du monoxyde de carbone au moins une partie du gaz riche en azote et appauvri en dioxyde de carbone et/ou au moins une partie du fluide riche en dioxyde de carbone et/ou au moins une partie du fluide appauvri en dioxyde de carbone.
- le gaz résiduaire sortant du régénérateur contient moins que 70% de dioxyde de carbone, de préférence moins que 50% de dioxyde de carbone.
- le gaz résiduaire sortant du régénérateur contient plus que 50% d'azote, de préférence plus que 70% d'azote.

Selon un autre objet de l'invention, il est prévu un appareil de séparation de dioxyde de carbone d'un gaz résiduaire d'une installation de craquage catalytique sur lit fluidisé contenant du dioxyde de carbone, de l'azote et du monoxyde de carbone, comprenant un convertisseur capable de convertir au moins une partie du monoxyde de carbone du gaz résiduaire en dioxyde de carbone pour former un débit enrichi en dioxyde de carbone par combustion, une unité de séparation pour séparer au moins une partie du débit enrichi en dioxyde de carbone comprenant une unité de séparation par adsorption pour former un gaz enrichi en dioxyde de carbone et appauvri en azote et un gaz riche en azote et appauvri en dioxyde de carbone et un appareil de séparation pour séparer au moins une partie du gaz enrichi en dioxyde de carbone et appauvri en azote par séparation à une température inférieure à 0°C par condensation partielle et/ou par distillation, pour former un fluide riche en dioxyde de carbone et un fluide appauvri en dioxyde de carbone et des moyens pour envoyer un gaz contenant au moins 90% d'oxygène au convertisseur pour participer à la combustion et des moyens pour envoyer au convertisseur un gaz contenant au moins 40% de dioxyde de carbone, constitué soit par un produit de la séparation du débit enrichi en dioxyde de carbone, soit par une partie du débit enrichi en dioxyde de carbone.

L'unité de de séparation par adsorption peut être un PSA ou un VPSA.

L'appareil peut comprendre une unité de craquage catalytique sur lit fluidisé comprenant un réacteur et un régénérateur.

L'invention sera décrite de manière plus détaillée en se référant aux figures:
[Fig. 1] représente un procédé selon l'invention.
[Fig. 2] représente un procédé selon l'invention.

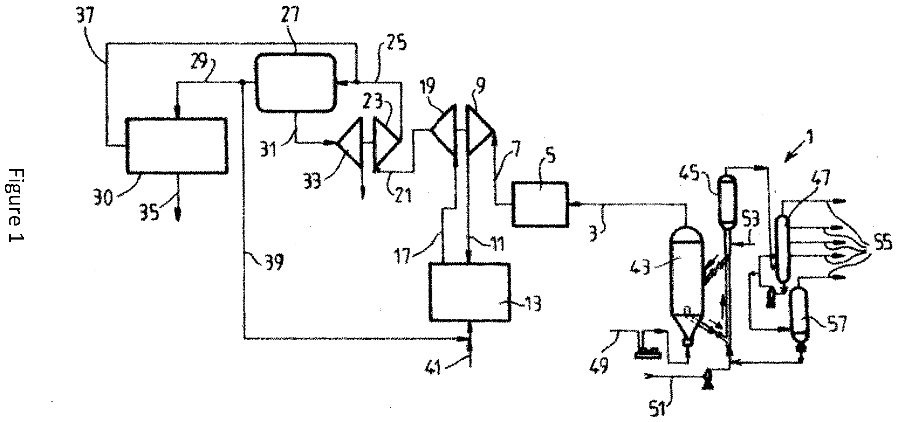

[FIG. 1] représente un procédé selon l'invention où un gaz appauvri en dioxyde de carbone ou enrichi en dioxyde de carbone produit en séparant un gaz provenant d'un convertisseur de monoxyde de carbone est recyclé à ce convertisseur.

L'unité 1 est une unité de craquage catalytique sur lit fluidisé d'une raffinerie. Elle comprend un réacteur 45 et un régénérateur 43. Dans ce procédé, le catalyseur s'écoule de manière continue entre le réacteur 45 et le régénérateur 43 dans lequel est soufflé de l'air 49 de combustion, puis retourne au réacteur 45 après avoir été débarrassé du coke accumulé sur le catalyseur lors de la réaction. Le réacteur 45 est alimenté par de la vapeur d'eau 53.

L'air 49 peut éventuellement être enrichi en oxygène pour contenir au plus 30% d'oxygène, sans modifier de manière significative la structure de l'unité 1 et les procédés opérés dans l'unité 1.

Après passage des charges 51 dans le réacteur 45, les effluents sont dirigés vers la tour de fractionnement principale 47 pour former les produits 55 du FCC.

Le liquide de cuve de la tour 47 est envoyé vers un séparateur de particules en suspension 57. Le fonctionnement de l'unité 1 est bien connu en soi et pour plus de détails on peut se référer à « Fluid Catalytic Cracking Technology and Operations' de Wilson, 1997 ou « Fluid Catalytic Cracking Handbook » de Sadeghbeigi, 2000.

Le gaz résiduaire 3 extrait du régénérateur 43 contient du monoxyde de carbone, du dioxyde de carbone et de l'azote ainsi que des poussières. Après séparation des poussières dans la filtre 5, un gaz épuré 7 est produit contenant par exemple 80% d'azote, 12,5% de dioxyde de carbone et 7,5% de monoxyde de carbone. Ce gaz 7 se trouve à 3,5 bars et 650°C et est détendu dans une turbine 9 ou dans une vanne jusqu'à une pression proche de l'atmosphérique et une température d'environ 450°C. Ce gaz détendu 11 est envoyé à une unité de conversion 13 appelée « CO boiler » où le monoxyde de carbone dans le gaz 11 est converti en dioxyde de carbone, au moins partiellement par combustion à l'oxygène 41. Le débit gazeux 41 contient au moins 90% d'oxygène, voire au moins 99,5% oxygène et peut provenir d'un appareil de séparation par distillation d'air.

L'oxygène 41 est de préférence mélangé en amont de la combustion à un débit de gaz 39 contenant au moins 40% de dioxyde de carbone et/ou a un recycle de fumée (=résiduaire en sortie du convertisseur CO). Dans la figure 1, ce débit constitue une partie du gaz 29 produit par l"unité d'adsorption 27 et destiné à l'unité de séparation 30. Dans cet exemple, le débit 39 est à 1,05 bar et contient 67% de CO2. Au moins une partie du fluide 39 est mélangée à l'oxygène 41 pour former le comburant utilisé par l'unité de conversion 13.

Sinon un autre débit contenant au moins 40% de dioxyde de carbone dérivé du débit 17,21 peut remplacer le débit 39 ou y être mélangé.

En addition ou alternativement, une partie du fluide 35 et/ou au moins une partie du fluide 37 peut être envoyée à l'unité de conversion 13.

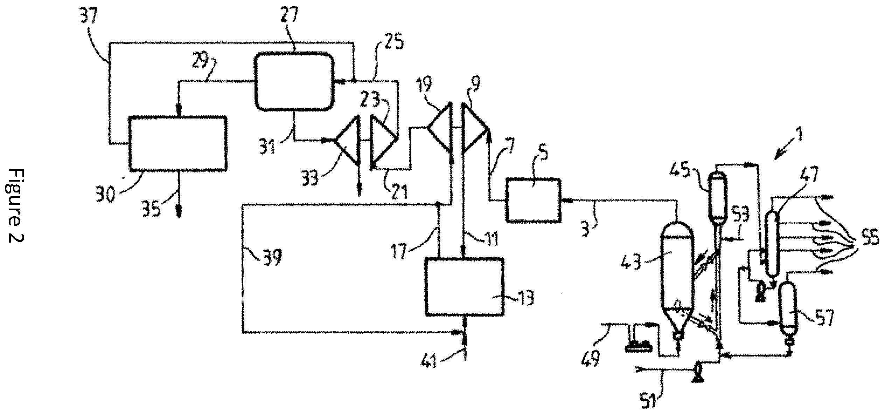

Dans la figure 2, le débit 39 est un recycle qui est constitué par une partie du gaz 17 pris en sortie du convertisseur 13 destiné à l'unité de séparation 27. Dans cet exemple, le débit 39 est à 1,05 bar et contient 20% de CO2. Une partie 39 du fluide 17 est mélangée à l'oxygène 41 pour former le comburant utilisé par l'unité de conversion 13. Le procédé de conversion produit également de la vapeur d'eau.

En plus de produire un résiduaire 17 plus riche en dioxyde de carbone qu'un convertisseur selon l'art antérieur, le procédé permet d'augmenter la température de la flamme dans le convertisseur 13 (en ayant un comburant plus riche en O2), ce qui permet de produire de la vapeur d'eau à une pression plus élevée et/ou à température plus élevée, tout en augmentant l'efficacité de la production de vapeur d'eau. L'unité 27 et l'unité 30 de la FIG. 2 seront d'autant plus petites que le gaz résiduaire est enrichi en dioxyde de carbone.

Ainsi est produit dans la figure 2 un gaz 17 à la pression atmosphérique et autour de 120°C contenant 26% de CO2, 3% d'oxygène et 71% d'azote. Le gaz 17 est éventuellement filtré puis comprimé dans un compresseur 19 couplé à la turbine 9 pour produire un gaz comprimé 21.

Un générateur d'électricité et/ou un moteur peut également est disposé sur le même arbre que le compresseur 19 et la turbine 9. Les étages de compression et de détente peuvent être montés sur un multiplicateur intégré (machine centrifuge dite `multi intégrée' ou en anglais « integrally geared »).

Le gaz comprimé 21 est ensuite comprimé dans un compresseur 23 jusqu'à entre 2,5 et 10 bars, par exemple au moins 8 bars et au moins 30°C comme gaz 25. Le gaz 25 alimente une unité de séparation par adsorption à pression alternée 27, généralement connue sous l'acronyme PSA (en anglais « Pressure Swing Adsorption »). Là il est séparé pour former un gaz enrichi en dioxyde de carbone et appauvri en azote et oxygène 29 (constituant un gaz de queue ou en anglais « tail gas ») et un gaz riche en azote, enrichi en oxygène et appauvri en dioxyde de carbone 31 (constituant le gaz produit ou en anglais « product gas »). Le gaz 31 à environ 8 bars est détendu (après éventuelle préchauffe) dans une turbine 33 couplée au compresseur 23 et relâché à l'atmosphère avec une composition de 97% d'azote et 3% de dioxyde de carbone. Le gaz 31 comprend au plus 5% de dioxyde de carbone, ou au plus 3% de dioxyde de carbone, voire au plus 1,5 % de dioxyde de carbone.

Cette détente dans la turbine 33 peut se faire après réchauffage du gaz 31. Il peut être réchauffé avec un fluide chaud de l'installation de craquage catalytique 1 et/ou par échange avec un fluide sortant d'un étage de compression en amont de l'unité d'adsorption 27 ou en amont de l'unité 30. Il peut même y avoir deux étages de turbine en série avec un réchauffage intermédiaire pour maximiser la récupération d'énergie à l'arbre de la turbine.

L'unité 27 peut être une unité de séparation par adsorption à pression alternée avec régénération sous vide, généralement connue sous l'acronyme VPSA (en anglais « Vacuum Pressure Swing Adsorption ». Dans ce cas, on comprimerait moins le gaz 21 mais l'unité comprendrait des pompes à vide. La pureté du gaz 29 serait plus élevée en CO2 et la consommation électrique de l'unité 27 pourrait être plus basse.

Le gaz 29 contenant entre 65 et 70% de dioxyde de carbone et entre 30 et 35% d'azote et autour de 1% d'oxygène est comprimé à une pression supérieure à 15 bar abs et préférentiellement entre 20 et 30 bar abs (le compresseur est inclus dans l'unité 30), séché puis refroidi dans un appareil de séparation 30 à une température inférieure à 0°C par condensation partielle et/ou par distillation pour former un fluide riche en dioxyde de carbone 35 et un fluide appauvri en dioxyde de carbone 37. Le gaz 29 peut contenir au moins 60% CO2, ou au moins 70% de CO2 ou au moins 80% de CO2.

Le fluide 35 contient au moins 70%, et préférentiellement au moins 95% de dioxyde de carbone sous forme liquide ou gazeuse. Le fluide 37 contient entre 18 et 28% de dioxyde de carbone ainsi que de l'azote et de l'oxygène et est recyclé en amont de l'unité d'adsorption 27 pour rejoindre le gaz 25 comme débit d'alimentation. Avant d'être mélangé au débit 25, le fluide 37 peut être détendu dans une vanne ou une turbine.

Eventuellement on sépare le fluide appauvri en dioxyde de carbone 37 dans une membrane pour produire un perméat enrichi en CO2. Le perméat peut être envoyé à l'unité d'adsorption 27 comme gaz d'alimentation à séparer. Le résidu peut être détendu dans une turbine et/ou mélangé avec le gaz riche en azote et appauvri en dioxyde de carbone 31 et/ou utilisé comme gaz de régénération pour l'étape ii).

La membrane peut éventuellement séparer le fluide 37 à une température inférieure à -30°C.

Le fluide appauvri en dioxyde de carbone 37 et/ou le gaz riche en azote et appauvri en dioxyde de carbone 31 peut être détendu dans une turbine jusqu'à une température inférieure à 0°C et supérieure à -100°C dans une enceinte contenant l'appareil de séparation 30. Ainsi il contribue à la production de frigories nécessaires.

Un sécheur du débit 25 peut être installé en amont de l'unité 27. Une unité de séparation utilisant du charbon activé peut être installée sur le débit 29 en amont de l'unité 30 ou sur le débit 25 en amont de l'unité 27 pour enlever des impuretés.

Dans toutes les figures, on peut séparer le débit enrichi en dioxyde de carbone 17 par distillation et/ou par condensation partielle et/ou par adsorption et/ou par absorption pour produire le produit contenant au moins 40% de dioxyde de carbone recyclé au convertisseur 13.

## Revendications

1. Procédé de séparation de dioxyde de carbone d'un gaz résiduaire (3,11) d'une installation de craquage catalytique sur lit fluidisé (1) contenant du dioxyde de carbone, de l'azote et du monoxyde de carbone, dans lequel :
i) On convertit au moins une partie du monoxyde de carbone du gaz résiduaire en dioxyde de carbone pour former un débit enrichi en dioxyde de carbone (17) par combustion,
ii) On sépare au moins une partie du débit enrichi en dioxyde de carbone (17,21,25) de l'étape i), par adsorption pour former un gaz enrichi en dioxyde de carbone et appauvri en azote (29) et un gaz riche en azote et appauvri en dioxyde de carbone (31) et on sépare dans un appareil de séparation (30) au moins une partie du gaz enrichi en dioxyde de carbone et appauvri en azote par séparation à une température inférieure à 0°C par condensation partielle et/ou par distillation pour former un fluide riche en dioxyde de carbone (29,35) et un fluide appauvri en dioxyde de carbone (31,37) et
iii) On envoie un gaz (41) contenant au moins 90% d'oxygène à la combustion de l'étape i) ainsi qu'un gaz (39) contenant au moins 40% de dioxyde de carbone, constitué soit par un produit de la séparation du débit enrichi en dioxyde de carbone, soit par une partie du débit enrichi en dioxyde de carbone.

2. Procédé selon la revendication 1 dans lequel le gaz riche en azote et appauvri en dioxyde de carbone (31) contient moins que 5% mol de CO2, voire moins de 3% de CO2 ou même moins que 1,5% de CO2.

3. Procédé selon l'une des revendications précédentes dans lequel le fluide riche en dioxyde de carbone (29) contient plus que 45% mol de CO2, voire plus que 50% de CO2 ou même plus que 70% de CO2, ou encore plus de 80% CO2.

4. Procédé selon l'une des revendications précédentes dans lequel le fluide appauvri en dioxyde de carbone (37) est comprimé et mélangé avec le débit enrichi en dioxyde de carbone (25) envoyé à l'étape ii).

5. Procédé selon l'une des revendications précédentes dans lequel on détend le gaz riche en azote et appauvri en dioxyde de carbone (31) dans une turbine (33) et on l'envoie à l'atmosphère, éventuellement après réchauffage.

6. Procédé selon la revendication 5 dans lequel le gaz riche en azote et appauvri en dioxyde de carbone (31) est réchauffé par un fluide provenant de l'installation de craquage catalytique (1) ou par au moins une partie du gaz enrichi en dioxyde de carbone et appauvri en azote (29) ou par au moins une partie du gaz résiduaire (3,11), ou au moins une partie du débit enrichi en dioxyde de carbone (35).

7. Procédé selon l'une des revendications précédentes dans lequel on détend le gaz résiduaire (3) en amont de l'étape i) dans une turbine (9) et on comprime le débit enrichi en dioxyde de carbone (17) dans un compresseur (19) entraîné par la turbine en amont de l'étape ii).

8. Procédé selon la revendication 7 dans lequel un générateur d'électricité et/ou un moteur est monté sur le même arbre ou le même multiplicateur que le compresseur (19) du débit enrichi en dioxyde de carbone (17) en amont de l'étape ii) et la turbine (9) du gaz résiduaire.

9. Procédé selon l'une des revendications précédentes dans lequel le fluide appauvri en dioxyde de carbone (37) et/ou le gaz riche en azote et appauvri en dioxyde de carbone (31) est détendu dans une turbine (33) jusqu'à une température inférieure à 0°C et supérieure à -100°C dans une enceinte contenant l'appareil de séparation (30).

10. Procédé selon l'une des revendications précédentes dans lequel on envoie à la combustion du monoxyde de carbone au moins une partie du gaz riche en azote et appauvri en dioxyde de carbone (31) et/ou au moins une partie du fluide riche en dioxyde de carbone (35) et/ou au moins une partie du fluide appauvri en dioxyde de carbone (37).

11. Procédé selon l'une des revendications précédentes dans lequel le gaz résiduaire (3) sortant d'un régénérateur (43) de l'unité (1) contient plus que 50% d'azote, de préférence plus que 70% d'azote.

12. Appareil de séparation de dioxyde de carbone d'un gaz résiduaire (3,11) d'une installation de craquage catalytique sur lit fluidisé contenant du dioxyde de carbone, de l'azote et du monoxyde de carbone, comprenant un convertisseur (13) capable de convertir au moins une partie du monoxyde de carbone du gaz résiduaire en dioxyde de carbone pour former un débit enrichi en dioxyde de carbone (17) par combustion, une unité de séparation (27, 30) pour séparer au moins une partie du débit enrichi en dioxyde de carbone comprenant une unité de séparation par adsorption (27) pour former un gaz enrichi en dioxyde de carbone et appauvri en azote (29) et un gaz riche en azote et appauvri en dioxyde de carbone (31) et un appareil de séparation (30) pour séparer au moins une partie du gaz enrichi en dioxyde de carbone et appauvri en azote par séparation à une température inférieure à 0°C par condensation partielle et/ou par distillation , pour former un fluide riche en dioxyde de carbone (29,35) et un fluide appauvri en dioxyde de carbone (31,37) et des moyens pour envoyer un gaz (41) contenant au moins 90% d'oxygène au convertisseur (13) pour participer à la combustion et des moyens pour envoyer au convertisseur (13) un gaz (39) contenant au moins 40% de dioxyde de carbone , constitué soit par un produit de la séparation du débit enrichi en dioxyde de carbone, soit par une partie du débit enrichi en dioxyde de carbone.

13. Appareil selon la revendication 12 dans lequel l'unité de séparation par adsorption (27) est un PSA ou un VPSA.

14. Appareil selon l'une des revendication 12 ou 13 comprenant une unité de craquage catalytique (1) sur lit fluidisé comprenant un réacteur (45) et un régénérateur (43).

## Patentansprüche

1. Verfahren zum Trennen von Kohlendioxid von einem Restgas (3, 11) einer katalytischen Wirbelschicht-Crackanlage (1), das Kohlendioxid, Stickstoff und Kohlenmonoxid enthält, bei dem:
i) mindestens ein Teil des Kohlenmonoxids des Restgases in Kohlendioxid umgewandelt wird, um durch Verbrennung einen an Kohlendioxid angereicherten Strom (17) zu bilden,
ii) mindestens ein Teil des an Kohlendioxid angereicherten Stroms (17, 21, 25) des Schritts i) durch Adsorption getrennt wird, um ein an Kohlendioxid angereichertes und an Stickstoff verarmtes Gas (29) und ein stickstoffreiches und an Kohlendioxid verarmtes Gas (31) zu bilden, und in einem Trenngerät (30) mindestens ein Teil des an Kohlendioxid angereicherten und an Stickstoff verarmten Gases durch Trennen bei einer Temperatur unter 0 °C durch Teilkondensation und/oder durch Destillation getrennt wird, um ein kohlendioxidreiches Fluid (29, 35) und ein an Kohlendioxid verarmtes Fluid (31, 37) zu bilden, und
iii) ein Gas (41), das mindestens 90 % Sauerstoff enthält, sowie ein Gas (39), das mindestens 40 % Kohlendioxid enthält und das entweder aus einem Produkt der Trennung des an Kohlendioxid angereicherten Stroms oder aus einem Teil des an Kohlendioxid angereicherten Stroms besteht, zu der Verbrennung des Schritts i) geleitet wird.

2. Verfahren nach Anspruch 1, bei dem das stickstoffreiche und an Kohlendioxid verarmte Gas (31) weniger als 5 Mol-% CO2 oder sogar weniger als 3 % CO2 oder sogar weniger als 1,5 % CO2 enthält.

3. Verfahren nach einem der vorhergehenden Ansprüche, bei dem das kohlendioxidreiche Fluid (29) mehr als 45 Mol-% CO2 oder sogar mehr als 50 % CO2 oder sogar mehr als 70 % CO2 oder aber mehr als 80 % CO2 enthält.

4. Verfahren nach einem der vorhergehenden Ansprüche, bei dem das an Kohlendioxid verarmte Fluid (37) verdichtet wird und mit dem an Kohlendioxid (25) angereicherten Strom gemischt wird, der zum Schritt ii) geleitet wird.

5. Verfahren nach einem der vorhergehenden Ansprüche, bei dem das stickstoffreiche und an Kohlendioxid verarmte Gas (31) in einer Turbine (33) entspannt wird und in die Atmosphäre geleitet wird, eventuell nach Wiedererwärmung.

6. Verfahren nach Anspruch 5, bei dem das stickstoffreiche und an Kohlendioxid verarmte Gas (31) durch ein Fluid, das aus der katalytischen Crackanlage (1) stammt, oder durch mindestens einen Teil des an Kohlendioxid angereicherten und an Stickstoff verarmten Gases (29) oder durch mindestens einen Teil des Restgases (3, 11) oder mindestens einen Teil des an Kohlendioxid angereicherten Stroms (35) wiedererwärmt wird.

7. Verfahren nach einem der vorhergehenden Ansprüche, bei dem das Restgas (3) stromauf des Schritts i) in einer Turbine (9) entspannt wird und der an Kohlendioxid angereicherte Strom (17) in einem Kompressor (19) verdichtet wird, der von der Turbine stromauf des Schritts ii) angetrieben wird.

8. Verfahren nach Anspruch 7, bei dem ein Stromgenerator und/oder ein Motor an derselben Welle oder demselben Übersetzungsgetriebe wie der Kompressor (19) des an Kohlendioxid angereicherten Stroms (17) stromauf des Schritts ii) und die Turbine (9) des Restgases montiert ist.

9. Verfahren nach einem der vorhergehenden Ansprüche, bei dem das an Kohlendioxid verarmte Fluid (37) und/oder das stickstoffreiche und an Kohlendioxid verarmte Gas (31) in einer Turbine (33) bis auf eine Temperatur unter 0 °C und über -100 °C in einer Kammer entspannt wird, die das Trenngerät (30) enthält.

10. Verfahren nach einem der vorhergehenden Ansprüche, bei dem zur Verbrennung des Kohlenmonoxids mindestens ein Teil des stickstoffreichen und an Kohlendioxid verarmten Gases (31) und/oder mindestens ein Teil des kohlendioxidreichen Fluids (35) und/oder mindestens ein Teil des an Kohlendioxid verarmten Fluids (37) geleitet wird.

11. Verfahren nach einem der vorhergehenden Ansprüche, bei dem das Restgas (3), das aus einem Regenerator (43) der Einheit (1) austritt, mehr als 50 % Stickstoff, bevorzugt mehr als 70 % Stickstoff enthält.

12. Trenngerät zum Trennen von Kohlendioxid von einem Restgas (3, 11) einer katalytischen Wirbelschicht-Crackanlage, das Kohlendioxid, Stickstoff und Kohlenmonoxid enthält, umfassend einen Konverter (13), der in der Lage ist, mindestens einen Teil des Kohlenmonoxids des Restgases in Kohlendioxid umzuwandeln, um durch Verbrennung einen an Kohlendioxid angereicherten Strom (17) zu bilden, eine Trenneinheit (27, 30), um mindestens einen Teil des an Kohlendioxid angereicherten Stroms zu trennen, umfassend eine Adsorptionstrenneinheit (27), um ein an Kohlendioxid angereichertes und an Stickstoff verarmtes Gas (29) und ein stickstoffreiches und an Kohlendioxid verarmtes Gas (31) zu bilden, und ein Trenngerät (30), um mindestens einen Teil des an Kohlendioxid angereicherten und an Stickstoff verarmten Gases durch Trennen bei einer Temperatur unter 0 °C durch Teilkondensation und/oder durch Destillation zu trennen, um ein kohlendioxidreiches Fluid (29, 35) und ein an Kohlendioxid verarmtes Fluid (31, 37) zu bilden, und Mittel zum Leiten eines Gases (41), das mindestens 90 % Sauerstoff enthält, zu dem Konverter (13), um zur Verbrennung beizutragen, und Mittel zum Leiten eines Gases (39) zu dem Konverter (13), das mindestens 40 % Kohlendioxid enthält und das entweder aus einem Produkt der Trennung des an Kohlendioxid angereicherten Stroms oder aus einem Teil des an Kohlendioxid angereicherten Stroms besteht.

13. Gerät nach Anspruch 12, bei dem die Adsorptionstrenneinheit (27) ein PSA oder ein VPSA ist.

14. Gerät nach einem der Ansprüche 12 oder 13, umfassend eine katalytische Wirbelschicht-Crackeinheit (1), umfassend einen Reaktor (45) und einen Regenerator (43).

## Claims

1. Process for separating carbon dioxide from a waste gas (3, 11) of a fluid catalytic cracking installation (1) containing carbon dioxide, nitrogen and carbon monoxide, wherein:
i) at least a portion of the carbon monoxide of the waste gas is converted into carbon dioxide to form a flow enriched in carbon dioxide (17) by combustion,
ii) at least a portion of the flow enriched in carbon dioxide (17, 21, 25) from step i) is separated by adsorption to form a gas enriched in carbon dioxide and depleted in nitrogen (29) and a gas rich in nitrogen and depleted in carbon dioxide (31), and at least a portion of the gas enriched in carbon dioxide and depleted in nitrogen is separated in a separation apparatus (30) by way of separation at a temperature of less than 0°C by partial condensation and/or by distillation to form a fluid rich in carbon dioxide (29, 35) and a fluid depleted in carbon dioxide (31, 37) and
iii) a gas (41) containing at least 90% oxygen is sent to the combustion of step i) as is a gas (39) containing at least 40% carbon dioxide, consisting either of a product of the separation of the flow enriched in carbon dioxide, or of a portion of the flow enriched in carbon dioxide.

2. Process according to Claim 1, wherein the gas rich in nitrogen and depleted in carbon dioxide (31) contains less than 5 mol% CO₂, indeed even less than 3% CO₂, or even less than 1.5% CO₂.

3. Process according to either of the preceding claims, wherein the fluid rich in carbon dioxide (29) contains more than 45 mol% CO₂, indeed even more than 50% CO₂, or even more than 70% CO₂, or indeed more than 80% CO₂.

4. Process according to one of the preceding claims, wherein the fluid depleted in carbon dioxide (37) is compressed and mixed with the flow enriched in carbon dioxide (25) sent to step ii).

5. Process according to one of the preceding claims, wherein the gas rich in nitrogen and depleted in carbon dioxide (31) is expanded in a turbine (33) and is sent to the atmosphere, possibly after heating.

6. Process according to Claim 5, wherein the gas rich in nitrogen and depleted in carbon dioxide (31) is heated by a fluid originating from the catalytic cracking installation (1) or by at least a portion of the gas enriched in carbon dioxide and depleted in nitrogen (29) or by at least a portion of the waste gas (3, 11), or at least a portion of the flow enriched in carbon dioxide (35) .

7. Process according to one of the preceding claims, wherein the waste gas (3) is expanded upstream of step i) in a turbine (9) and the flow enriched in carbon dioxide (17) is compressed in a compressor (19) driven by the turbine upstream of step ii).

8. Process according to Claim 7, wherein an electricity generator and/or a motor is mounted on the same shaft or the same speed-increasing gearing as the compressor (19) for the flow enriched in carbon dioxide (17) upstream of step ii) and the turbine (9) for the waste gas.

9. Process according to one of the preceding claims, wherein the fluid depleted in carbon dioxide (37) and/or the gas rich in nitrogen and depleted in carbon dioxide (31) is expanded in a turbine (33) to a temperature of less than 0°C and greater than -100°C in a chamber containing the separation apparatus (30).

10. Process according to one of the preceding claims, wherein at least a portion of the gas rich in nitrogen and depleted in carbon dioxide (31) and/or at least a portion of the fluid rich in carbon dioxide (35) and/or at least a portion of the fluid depleted in carbon dioxide (37) is/are sent to the combustion of the carbon monoxide.

11. Process according to one of the preceding claims, wherein the waste gas (3) leaving a regenerator (43) of the unit (1) contains more than 50% nitrogen, preferably more than 70% nitrogen.

12. Apparatus for separating carbon dioxide from a waste gas (3, 11) of a fluid catalytic cracking installation containing carbon dioxide, nitrogen and carbon monoxide, comprising a converter (13) capable of converting at least a portion of the carbon monoxide of the waste gas into carbon dioxide to form a flow enriched in carbon dioxide (17) by combustion, a separation unit (27, 30) for separating at least a portion of the flow enriched in carbon dioxide, comprising an adsorption separation unit (27) to form a gas enriched in carbon dioxide and depleted in nitrogen (29) and a gas rich in nitrogen and depleted in carbon dioxide (31) and a separation apparatus (30) for separating at least a portion of the gas enriched in carbon dioxide and depleted in nitrogen by separation at a temperature of less than 0°C by partial condensation and/or by distillation, to form a fluid rich in carbon dioxide (29, 35) and a fluid depleted in carbon dioxide (31, 37) and means for sending a gas (41) containing at least 90% oxygen to the converter (13) to take part in the combustion and means for sending to the converter (13) a gas (39) containing at least 40% carbon dioxide, consisting either of a product of the separation of the flow enriched in carbon dioxide, or of a portion of the flow enriched in carbon dioxide.

13. Apparatus according to Claim 12, wherein the adsorption separation unit (27) is a PSA or a VPSA.

14. Apparatus according to either of Claims 12 and 13, comprising a fluid catalytic cracking unit (1) comprising a reactor (45) and a regenerator (43).
